# EUROPEAN PATENT SPECIFICATION

(11) **EP 3 667 988 B1**
(45) Date of publication and mention of the grant of the patent: **05.08.2026**
(21) Application number: 18844458.2
(22) Date of filing: 28.06.2018
(51) Int. Cl.: H04L 5/00, H04W 72/04, H04W 24/02

(54) **PILOT CONFIGURATION METHOD, CHANNEL MEASUREMENT METHOD, AND COMMUNICATION DEVICE**
PILOTKONFIGURIERUNGSVERFAHREN, KANALMESSVERFAHREN UND KOMMUNIKATIONSVORRICHTUNG
PROCÉDÉ DE CONFIGURATION DE PILOTE, PROCÉDÉ DE MESURE DE CANAL ET DISPOSITIF DE COMMUNICATION

(30) Priority: 10.08.2017 CN 201710682645
(43) Date of publication of application: 17.06.2020
(73) Proprietor: Datang Mobile Communications Equipment Co., Ltd., Beijing 100085 (CN)
(72) Inventor: LI, Hui, Beijing 100191 (CN); RAKESH, Tamrakar, Beijing 100191 (CN); GAO, Qiubin, Beijing 100191 (CN); CHEN, Runhua, Beijing 100191 (CN); SU, Xin, Beijing 100191 (CN)
(74) Representative: Ipsilon
(86) International application number: PCT/CN2018/093402
(87) International publication number: WO 2019/029292

(56) References cited:
- WO-A1-2017/075836
- WO-A1-2017/105129
- CN-A- 102 118 867
- CN-A- 102 255 689
- CN-A- 103 220 068
- CN-A- 103 391 174
- CN-A- 106 411 473
- LG ELECTRONICS: "On CSI-RS design for CSI acquisition", vol. RAN WG1, no. Qingdao, P.R. China; 20170627 - 20170630, 26 June 2017 (2017-06-26), XP051299509, Retrieved from the Internet <URL:http://www.3gpp.org/ftp/Meetings_3GPP_SYNC/RAN1/Docs/> [retrieved on 20170626]
- HUAWEI ET AL: "CSI-RS design for CSI acquisition", vol. RAN WG1, no. Hangzhou, China; 20170515 - 20170519, 14 May 2017 (2017-05-14), XP051272162, Retrieved from the Internet <URL:http://www.3gpp.org/ftp/Meetings_3GPP_SYNC/RAN1/Docs/> [retrieved on 20170514]
- QUALCOMM INCORPORATED: "Discussion on CSI-RS Design", vol. RAN WG1, no. Qingdao, China; 20170627 - 20170630, 27 June 2017 (2017-06-27), XP051305913, Retrieved from the Internet <URL:http://www.3gpp.org/ftp/tsg_ran/WG1_RL1/TSGR1_AH/NR_AH_1706/Docs/> [retrieved on 20170627]

## Description

The present application claims priority to Chinese Patent Application No. 201710682645.1, filed with the Chinese Patent Office on August 10, 2017 and entitled "Pilot Configuration Method, Channel Measurement Method, and Communication Device".

### Field

The present application relates to the field of communication technologies, and particularly to a pilot configuration method, a channel measurement method, and a communication device.

### Background

The MIMO (Multi-Input Multiple-Output) technology, as the important multi-antenna technology for physical layer to improve the transmission quality and efficiency, plays an important role in the new generation of communication systems. The New Radio Access Technology (New RAT, NR) systems or LTE (Long Term Evolution) systems support the transmit diversity, spatial multiplexing technology, and Beam Forming (BF) and other MIMO technologies.

In order to make better use of the advantages of the MIMO technology, the pilot structure in the system has also changed accordingly. Generally, the downlink pilots sent by the base station include the demodulation pilot (i.e., Demodulation Reference Signal (DMRS)) and the measurement pilot (i.e., Channel State Indication-Reference Signal (CSI-RS)). Here, the CSI-RS is a periodically-transmitted pilot structure that may be used for the channel measurement by a terminal and has multiple possible patterns in a subframe.

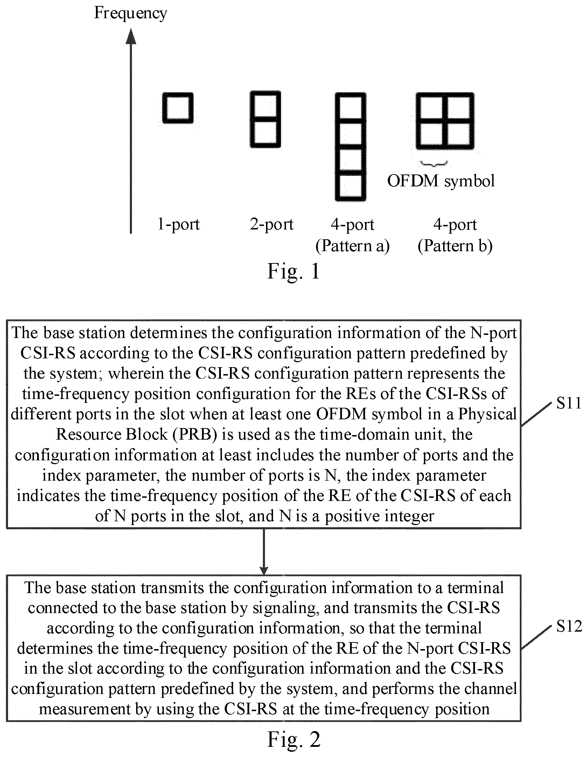

At present, in the NR system, four basic component CSI-RS RE patterns are defined when the density of the CSI-RS pilot signals for obtaining the Channel State Information (CSI) is 1RE/PRB/Port at the CSI-RS port. As shown in Fig.1, in one PRB, the 1-port CSI-RS configuration pattern is composed of a Resource Element (RE), and the 2-port CSI-RS configuration pattern is composed of two REs adjacent in the frequency domain on one Orthogonal Frequency Division Multiplexing (OFDM) symbol. The 4-port CSI-RS configuration patterns contain two kinds of patterns: one is composed of 4 REs adjacent in the frequency domain on one OFDM symbol (pattern a), and the other is composed of 4 REs where there are 2 REs adjacent in the frequency domain on each of 2 OFDM symbols adjacent in the time domain (pattern b). The higher-port CSI-RS configuration patterns may be obtained by aggregating these CSI-RS configuration patterns, for example, 16-port CSI-RS may be obtained by aggregating four 4-port CSI-RS configuration patterns.

In the actual application, the terminal needs to perform the channel measurement using the CSI-RS when reporting the data. Since only the above CSI-RS RE patterns are defined and the higher-port CSI-RS patterns are generated by aggregation in the NR system, there are multiple possibilities for the time-frequency resource position occupied by a N-port CSI-RS in a PRB. However, there is no corresponding solution on how to notify the terminal of the time-frequency resource position occupied by the N-port CSI-RS configured by the base station.

LG ELECTRONICS: "On CSI-RS design for CSI acquisition", 3GPP DRAFT; R1-1710293 discloses discussions on CSI-RS for CSI acquisition. Based on the above discussions and agreements in previous meetings, we can summarize the necessary configuration of a CSI-RS resource for CSI acquisition by higher layer which should at least include following parameters: 1) Number of CSI-RS ports denoted by X, i.e., one value out of {1, 2, 4, 8, 12, 16, 24, 32}. 2) CSI-RS density value denoted by D (RE/PRB/port) out of {1/2, 1}. 3) A joint configuration of (CDM length (L), CDM type) with some restrictions on such selection depending on the configured value of X. 4) Starting RE location (ki, li) for the i-th component CSI-RS RE pattern, for which i = 1, ..., X/L, according to the possible CSI-RS RE pattern aggregation depending on the configured value of X and L, where li: OFDM symbol index within a slot, ki: subcarrier index within a PRB.

### Summary

The embodiments of the present application provide a pilot configuration method, a channel measurement method and a communication device, so as to solve the technical problem in the NR system that the terminal cannot determine the time-frequency resource position occupied by the CSI-RS to thereby affect the channel measurement.

In a first aspect, an embodiment of the present application provides a pilot configuration method which includes:
determining, by the base station, configuration information of an N-port Channel State Information-Reference Signal, CSI-RS, according to a CSI-RS configuration pattern predefined by a system; wherein the CSI-RS configuration pattern represents time-frequency position configuration for Resource Elements, REs, of CSI-RSs of different ports in a slot when at least one Orthogonal Frequency Division Multiplexing, OFDM, symbol in a Physical Resource Block, PRB, is used as a time-domain unit, the configuration information at least includes the number of ports and an index parameter, the number of ports is N, the index parameter indicates a time-frequency position of an RE of a CSI-RS of each of N ports in the slot, and N is a positive integer;
transmitting, by the base station, the configuration information to a terminal connected to the base station by signaling, and transmitting the CSI-RS according to the configuration information, so that the terminal determines a time-frequency position of an RE of the N-port CSI-RS in the slot according to the configuration information and the CSI-RS configuration pattern predefined by the system, and performs a channel measurement by using the CSI-RS at the time-frequency position;
wherein the index parameter includes a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

In a possible embodiment, when N=1, 2 or 4, determining, by the base station, configuration information of the N-port CSI-RS according to the CSI-RS configuration pattern predefined by the system, includes:
determining, by the base station, an index parameter of the RE of the CSI-RS in the slot according to the CSI-RS configuration pattern predefined by the system;
determining, by the base station, the configuration information of the CSI-RS according to the port number of the N-port and the index parameter.

In a possible embodiment, when N≥8, the configuration information further includes an aggregation parameter, which represents an aggregation mode of REs of the N-port CSI-RS in the slot; and determining, by the base station, configuration information of the N-port CSI-RS according to the CSI-RS configuration pattern predefined by the system, includes:
determining, by the base station, an aggregation parameter of the N-port CSI-RS, and determining the index parameter of the RE of each aggregation part of the N-port CSI-RS in the slot respectively according to the CSI-RS configuration pattern predefined by the system;
determining, by the base station, the configuration information of the CSI-RS according to the port number of the N-port, the index parameter and the aggregation parameter.

In a possible embodiment, when the base station transmits the index parameter in the configuration information to the connected terminal by signaling, the method includes:
transmitting, by the base station, configuration pattern indexes and OFDM symbol indexes of all REs of the N-port CSI-RS to the terminal by signaling; or
transmitting, by the base station, a configuration pattern index and an OFDM symbol index of at least one RE of the N-port CSI-RS to the terminal by signaling.

In a second aspect, an embodiment of the present application provides a channel measurement method, applied to a terminal, which includes:
receiving configuration information of an N-port Channel State Information-Reference Signal, CSI-RS, transmitted by a base station through signaling, and receiving the CSI-RS transmitted by the base station according to the configuration information; wherein the configuration information at least includes the number of ports and an index parameter, the index parameter indicates a time-frequency position of a Resource Element, RE, of a CSI-RS of each of N ports in a slot, and N is a positive integer;
determining, by the terminal, a time-frequency position of the RE of the CSI-RS in the slot according to the configuration information and a CSI-RS configuration pattern predefined by a system; wherein the CSI-RS configuration pattern represents time-frequency position configuration for REs of CSI-RSs of different ports in the slot when at least one Orthogonal Frequency Division Multiplexing, OFDM, symbol in a Physical Resource Block, PRB, is used as a time-domain unit;
performing, by the terminal, a channel measurement by using the CSI-RS at the time-frequency position;
wherein the index parameter includes a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

In a possible embodiment, when the configuration information further includes an aggregation parameter, which represents an aggregation mode of the RE of the CSI-RS in the slot;
determining, by the terminal, a time-frequency position of the RE of the N-port CSI-RS in the slot according to the configuration information and a CSI-RS configuration pattern predefined by a system, includes:
determining, by the terminal, a time-frequency position of each aggregation part of the N-port CSI-RS in the slot according to the number of ports, the aggregation parameter, the index parameter, and the CSI-RS configuration pattern predefined by the system.

In a third aspect, an embodiment of the present application provides a base station, which includes:
a configuration module configured to determine configuration information of an N-port Channel State Information-Reference Signal, CSI-RS, according to a CSI-RS configuration pattern predefined by a system; wherein the CSI-RS configuration pattern represents time-frequency position configuration for Resource Elements, REs, of CSI-RSs of different ports in a slot when at least one Orthogonal Frequency Division Multiplexing, OFDM, symbol in a Physical Resource Block, PRB, is used as a time-domain unit, the configuration information at least includes the number of ports and an index parameter, the number of ports is N, the index parameter indicates a time-frequency position of an RE of a CSI-RS of each of N ports in the slot, and N is a positive integer;
a transmission module configured to transmit the configuration information to a terminal connected to the base station by signaling, and transmit the CSI-RS according to the configuration information, so that the terminal determines a time-frequency position of an RE of the N-port CSI-RS in the slot according to the configuration information and the CSI-RS configuration pattern predefined by the system, and performs a channel measurement by using the CSI-RS at the time-frequency position;
wherein the index parameter includes a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

In a possible embodiment, when N=1, 2 or 4, the configuration module includes:
a first determining module configured to determine an index parameter of the RE of the N-port CSI-RS in the slot according to the CSI-RS configuration pattern predefined by the system;
a second determining module configured to determine the configuration information of the N-port CSI-RS according to the port number of the N-port and the index parameter.

In a possible embodiment, when N≥8, the configuration information further includes an aggregation parameter, which represents an aggregation mode of the RE of the N-port CSI-RS in the slot, and the configuration module includes:
a third determining module configured to determine an aggregation parameter of the N-port CSI-RS, and determine the index parameter of the RE of each aggregation part of the N-port CSI-RS in the slot respectively according to the CSI-RS configuration pattern predefined by the system;
a fourth determining module configured to determine the configuration information of the N-port CSI-RS according to the port number of the N-port, the index parameter and the aggregation parameter.

In a possible embodiment, when transmitting the index parameter in the configuration information to the connected terminal by signaling, the transmission module is configured to:
transmit configuration pattern indexes and OFDM symbol indexes of all REs of the N-port CSI-RS to the terminal by signaling; or
transmit a configuration pattern index and an OFDM symbol index of at least one RE of the N-port CSI-RS to the terminal by signaling.

In a fourth aspect, an embodiment of the present application provides a terminal, which includes:
a receiving module configured to receive configuration information of an N-port Channel State Information-Reference Signal, CSI-RS, transmitted by a base station through signaling, and receive the CSI-RS transmitted by the base station according to the configuration information; wherein the configuration information at least includes the number of ports and an index parameter, the index parameter is used to indicate a time-frequency position of a Resource Element, RE, of a CSI-RS of each of N ports in a slot, and N is a positive integer;
a determining module configured to determine a time-frequency position of the N-port CSI-RS in the slot according to the configuration information and a CSI-RS configuration pattern predefined by a system; wherein the CSI-RS configuration pattern represents time-frequency position configuration for REs of CSI-RSs of different ports in the slot when at least one Orthogonal Frequency Division Multiplexing, OFDM, symbol in a Physical Resource Block, PRB, is used as a time-domain unit;
a measurement module configured to perform a channel measurement by using the CSI-RS at the time-frequency position;
wherein the index parameter includes a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

In a possible embodiment, when the configuration information further includes an aggregation parameter, which represents an aggregation mode of the RE of the CSI-RS in the slot;
the determining module is configured to determine a time-frequency position of each aggregation part of the N-port CSI-RS in the slot according to the number of ports, the aggregation parameter, the index parameter, and the CSI-RS configuration pattern predefined by the system.

In a fifth aspect, an embodiment of the present application provides a computer device which includes a processor configured, when executing a computer program stored in a memory, to implement the methods provided in the first and second aspects.

In a sixth aspect, an embodiment of the present application provides a computer readable storage medium storing the computer instructions, which cause a computer to perform the methods provided in the first and second aspects when running on the computer.

In the embodiments of the present application, the base station can determine the configuration information of the N-port CSI-RS according to the system pre-definition which is the CSI-RS configuration patterns defined for the CSI-RSs of different ports when at least one OFDM symbol in a PRB is used as the time-frequency unit, where the configuration information includes the number of ports and the index parameter, the number of ports is N, the index parameter may indicate the time-frequency position of the RE of the CSI-RS in the slot, then the base station may transmit the configuration information to the terminal by signaling and transmit the CSI-RS to the terminal according to the configuration information, so the terminal may determine the specific time-frequency position of the RE of the CSI-RS in the slot according to the configuration information and the CSI-RS configuration pattern and thus perform the channel measurement, CSI calculation and others by using the CSI-RS at the time-frequency position, which effectively solves the technical problem of channel measurement in the NR system that the terminal cannot determine the time-frequency resource position occupied by the CSI-RS.

### Brief Description of the Drawings

Fig.1 is a schematic diagram of CSI-RS configuration patterns in the prior art;
Fig.2 is a flow chart of a pilot configuration method in accordance with an embodiment of the present application;
Figs.3A-3D are flow charts of a channel measurement method in accordance with an embodiment of the present application;
Fig.4 is a schematic diagram of a 32-port CSI-RS configuration pattern in accordance with an embodiment of the present application;
Fig.5 is a schematic diagram of a 4-port CSI-RS configuration pattern in accordance with an embodiment of the present application;
Fig.6 is a flow chart of a channel measurement method in accordance with an embodiment of the present application;
Fig.7 is a schematic module diagram of a base station in accordance with an embodiment of the present application;
Fig.8 is a schematic module diagram of a terminal in accordance with an embodiment of the present application; and
Fig.9 is a schematic structural diagram of a computer device in accordance with an embodiment of the present application.

### Detailed Description

In order to make the objects, technical solutions and advantages of the present application clearer, the present application will be further illustrated below in details with reference to the accompanying figures. Obviously the described embodiments are merely a part of the embodiments of the present application, but not all the embodiments. Based upon the embodiments of the present application, all of other embodiments obtained by those ordinary skilled in the art without creative work pertain to the protection scope of the present application.

The technical solution described herein may be used in the fifth-generation mobile communication technology (5G) system, and may also be used in the next-generation mobile communication system.

In the following, some terms in the embodiments of the present application are explained so as to facilitate the understanding of those skilled in the art.
(1) Base station may refer to a device in the access network that communicates with a terminal through one or more sectors over the air interface. For example, the base station may include the evolutional Node B (NodeB or eNB or e-NodeB) in the Long Term Evolution (LTE) system or LTE-Advanced (LTE-A) system, or may include the next generation node B (gNB) in the 5G system. The base station in the embodiments of the present application mainly refers to the base station in the 5G system.
(2) Terminal may be a device having the wireless communication function. The terminal may receive the downlink data (e.g., CSI-RS) transmitted by the base station, and can report the corresponding data (e.g., CSI). The terminal may communicate with the core network via the Radio Access Network (RAN). The terminal may include User Equipment (UE), wireless terminal, mobile terminal, Subscriber Unit, Subscriber Station, Mobile Station, Mobile, Remote Station, Access Point (AP), Remote Terminal, Access Terminal, User Terminal, User Agent, or User Device, etc. For example, it may include a mobile phone (or called "cellular" phone); a computer with a mobile terminal; a portable, pocket, handheld, computer built-in or vehicle-carried mobile device; a smart wearable device or the like, e.g., Personal Communication Service (PCS) telephone, cordless telephone, Session Initiation Protocol (SIP) telephone, Wireless Local Loop (WLL) station, Personal Digital Assistant (PDA), smart watch, smart helmet, smart glasses, smart bracelet, and other devices. It also includes limited devices, e.g., device with lower power consumption, device with limited storage capability, or device with limited computing capability or the like, e.g., includes the bar code, Radio Frequency Identification (RFID) sensor, Global Positioning System (GPS), laser scanner and other information sensing devices.
(3) Port, also called antenna port, may refer to a logical port used for transmission. One port may correspond to one or more actual physical antennas. Generally, the antenna port is defined by the Reference Signal (RS) for the antenna.

The technical solutions according to the embodiments of the present application will be introduced below with reference to the drawings.

### First embodiment

An embodiment of the present application provides a pilot configuration method, which can be applied to a base station. As shown in Fig.2, the method can be described as follows.

S11: the base station determines the configuration information of the N-port CSI-RS according to the CSI-RS configuration pattern predefined by the system. The CSI-RS configuration pattern represents the time-frequency position configuration for the REs of the CSI-RSs of different ports in the slot when at least one OFDM symbol in a Physical Resource Block (PRB) is used as the time-domain unit, the configuration information at least includes the number of ports and the index parameter, the number of ports is N, the index parameter indicates the time-frequency position of the RE of the CSI-RS of each port of N ports in the slot, and N is a positive integer.

S12: the base station transmits the configuration information to a terminal connected to the base station by signaling, and transmits the CSI-RS according to the configuration information, so that the terminal determines the time-frequency position of RE of the N-port CSI-RS in the slot according to the configuration information and the CSI-RS configuration pattern predefined by the system, and performs the channel measurement by using the CSI-RS at the time-frequency position.

Specifically, the base station may be a base station in the NR system such as 5G system.

In an embodiment of the present application, before S11, the system may use one or two OFDM symbols in one PRB as the time-frequency unit, and define the corresponding CSI-RS configuration patterns for the CSI-RSs of different ports. Here, the size of one PRB is one slot in the time domain and includes 12 subcarriers in the frequency domain. In normal cases, the number of OFDM symbols contained in one slot may be 7 or 14, which corresponds to 84 or 168 Resource Elements (REs).

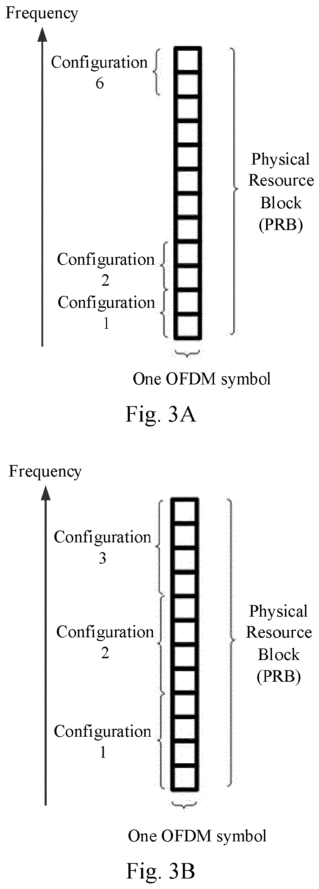

Fig.3A is the 2-port CSI-RS configuration pattern predefined by the system. In Fig.3A, the CSI-RS configuration pattern is defined by taking one OFDM symbol as the time-frequency unit as an example. The 2-port CSI-RS can be defined to have 6 types of CSI-RS configuration patterns, corresponding to "Configuration 1 to Configuration 6" in the Figure, where each configuration pattern corresponds to two adjacent REs on one OFDM symbol.

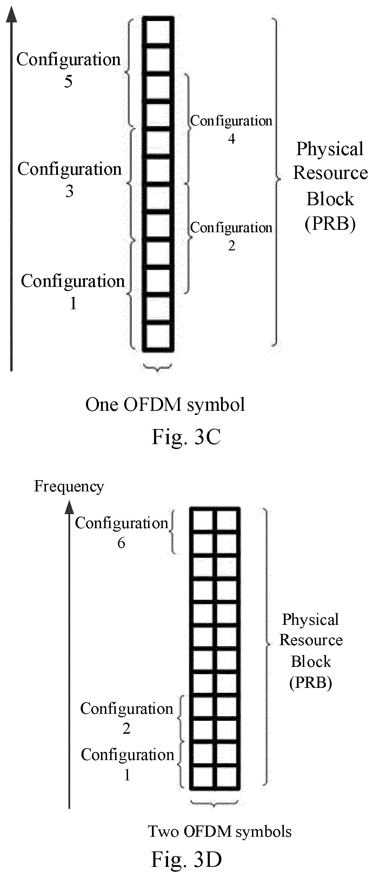

Figs.3B-3D are the 4-port CSI-RS configuration patterns predefined by the system. Here, the 4-port CSI-RS configuration pattern a may define 3 types (as shown in Fig.3B) or 5 types (as shown in Fig.3C) of CSI-RS configuration patterns, where each configuration pattern corresponds to four adjacent REs on one OFDM symbol. Fig.3D is the 4-port CSI-RS configuration pattern b. The system may predefine 6 types of CSI-RS configuration patterns, where each configuration pattern corresponds to two adjacent REs on two OFDM symbols. In the practical applications, the configuration of the 4-port CSI-RS pattern b may reuse 2-port CSI-RS configuration pattern, without being redefined.

In the practical applications, the CSI-RS configuration patterns predefined by the system may be well known by the base station and the terminal.

In an embodiment of the present application, the base station may configure the N-port CSI-RS according to the system predefinition and determine the configuration information of the N-port CSI-RS, where the configuration information at least includes the number of ports and the index parameter, and the number of ports corresponds to N-port, that is, the value of the number of ports is N. The index parameter may indicate the time-frequency position of the RE(s) of the CSI-RS of each of N ports or the port of each aggregation part (i.e., in the aggregation case) in the slot.

The index parameter may include the configuration pattern index and the OFDM symbol index, wherein the configuration pattern index may be the position index of the RE of the CSI-RS determined by the base station according to the CSI-RS configuration pattern predefined by the system in the frequency domain, for example, the configuration pattern index corresponding to "Configuration 1" in Fig.3A is "1", which represents that the position index of the RE in the frequency domain is "1"; the configuration pattern index corresponding to "Configuration 2" in Fig.3A is "2", which represents that the position index of the RE in the frequency domain is "2". The OFDM symbol index may indicate the position of the OFDM symbol corresponding to the RE(s) of the CSI-RS in the time domain, i.e., the OFDM symbol index in one slot.

In the actual applications, for the configuration pattern b of the 4-port CSI-RS, there may be only a need to notify the terminal of the OFDM symbol index of one OFDM symbol, and the terminal can know the time-frequency position of the RE(s) of the CSI-RS in the slot. For example, when the configuration pattern b of the 4-port CSI-RS predefined by the system corresponds to the "Configuration 2" in Fig.3C, the base station may only inform the terminal of the OFDM symbol index representing the position of the RE(s) in the slot, for example, the OFDM symbol index is 4, and the terminal may determine the time-frequency position of the RE(s) of the CSI-RS in the slot according to the OFDM symbol index and the well-known configuration 2 predefined by the system.

Of course, in the actual applications, the configuration information may further include other parameter information, e.g., the period of the CSI-RS and others, in addition to the parameters introduced above. The configuration information may be set by those skilled in the art according to the actual situations, and is not limited by the embodiments of the present application.

In the embodiments of the present application, the system predefines the CSI-RS configuration patterns of some ports (such as 1-port, 2-port, and 4-port), while the CSI-RS configuration patterns of higher ports may be obtained by aggregating the CSI-RS configuration patterns predefined by the system. Therefore, according to different cases of the number of ports, the base station may determine the CSI-RS configuration information by using different methods, which are described below respectively.

First case: when N = 1, 2 or 4, the base station may determine the index parameter of the RE of the CSI-RS in the slot according to the CSI-RS configuration pattern predefined by the system, and thus the base station may determine the CSI-RS configuration information according to the port number of the N-port and the index parameter.

That is, when the base station configures the 1-port, 2-port or 4-port CSI-RS, the base station may determine the time-frequency position of the RE of the CSI-RS in the slot directly according to the CSI-RS configuration patterns of these ports predefined by the system.

Second case: when N ≥ 8, the configuration information further includes the aggregation parameter which represents the aggregation mode of the REs of the N-port CSI-RS in the slot. In this way, the base station may determine the aggregation parameter of the N-port CSI-RS, and determine the index parameters of the REs of each aggregation part of the N-port CSI-RS in the slot respectively according to the CSI-RS configuration pattern predefined by the system, where the aggregation parameter represents the aggregation mode of the REs of the N-port CSI-RS in the slot. Then the base station may determine the CSI-RS configuration information according to the port number of N-port, the index parameter and the aggregation parameter.

In the practical applications, when transmitting the index parameter to the connected terminal by signaling, the base station may adopt but not limited to the two following ways.

First way: the base station transmits the configuration pattern indexes and OFDM symbol indexes of all REs of the N-port CSI-RS to the terminal by signaling.

Second way: the base station transmits the configuration pattern index and the OFDM symbol index of at least one RE of the N-port CSI-RS to the terminal by signaling.

That is, when N≥8, the base station may inform the terminal of the configuration pattern index and OFDM symbol index of each CSI-RS configuration pattern for aggregation by signaling; or may inform the terminal of a part of those, e.g., the configuration pattern index and OFDM symbol index of one or more CSI-RS configuration patterns by signaling in order to reduce the amount of data in the configuration information.

After determining the configuration information of the N-port CSI-RS, the base station may transmit the CSI-RS to the terminal according to the configuration information, and transmit the configuration information to the terminal by signaling (e.g., high-level signaling) to inform the terminal of the time-frequency position of the RE of the N-port CSI-RS in the slot, which is convenient for the terminal to perform the channel measurement according to the CSI-RS at the time-frequency position.

The application scenarios of the embodiments of the present application will be illustrated below by way of the specific examples.

It is assumed that the 2-port and 4-port CSI-RS configuration patterns predefined by the system are as shown in Fig.3A-3C.

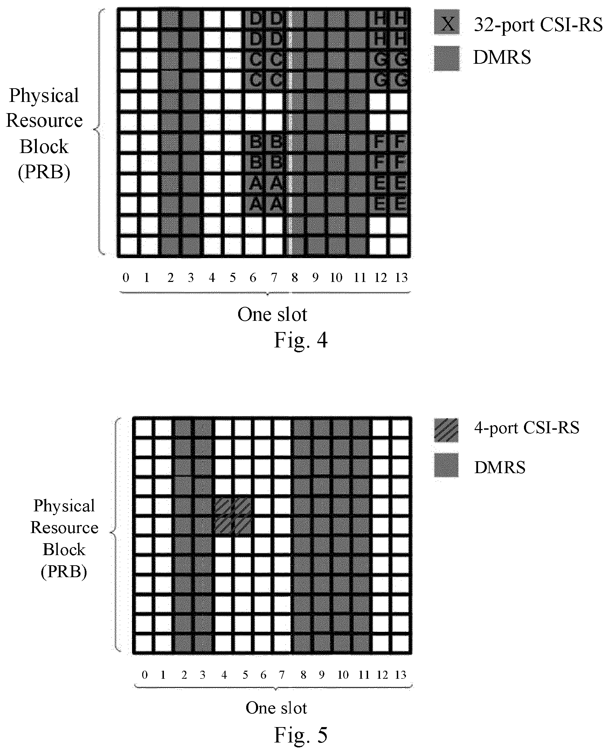

First scenario: when a 32-port CSI-RS is configured by the system, the corresponding CSI-RS configuration pattern is shown in Fig.4, where "X" represents a letter. When the system predefines that this 32-port CSI-RS is obtained by aggregating eight 4-port CSI-RS configuration patterns (b), and the REs marked with the same letter in Fig.4 represent the same 4-port CSI-RS configuration pattern, then the index parameters corresponding to the eight 4-port CSI-RS configuration patterns are:
- Configuration 2, OFDM symbol index 6 (pattern where letter A is located);
- Configuration 3, OFDM symbol index 6 (pattern where letter B is located);
- Configuration 5, OFDM symbol index 6 (pattern where letter C is located);
- Configuration 6, OFDM symbol index 6 (pattern where letter D is located);
- Configuration 2, OFDM symbol index 12 (pattern where letter E is located);
- Configuration 3, OFDM symbol index 12 (pattern where letter F is located);
- Configuration 5, OFDM symbol index 12 (pattern where letter G is located);
- Configuration 6, OFDM symbol index 12 (pattern where letter H is located).

Here, "Configuration" refers to the configuration pattern index.

Then, in the configuration information, the base station may notify the terminal of the port number (i.e., N=32) and all the above 8 configuration patterns indexes and 8 OFDM symbol indexes by signaling, or may notify the terminal of 2 OFDM symbol indexes (i.e., 6, 12) and 4 configuration pattern indexes (i.e., 2, 3, 5, 6) on each OFDM symbol by signaling.

Then the terminal receives the CSI-RS sent by the base station according to the configuration information, and simultaneously receives the configuration information of the 32-port CSI-RS sent by the base station. According to the system predefinition that the 32-port CSI-RS is obtained by aggregating eight 4-port component CSI-RS RE patterns (b), the time-frequency position of each CSI-RS RE pattern may be determined to perform the channel measurement and CSI calculation.

Second scenario: when a 4-port CSI-RS (N=4) is configured by the system and the pattern b is used, then as shown in Fig.5: the index parameters corresponding to the 4-port CSI-RS configuration pattern are:
- Configuration 4, OFDM symbol index 4.

Here, "Configuration" refers to the configuration pattern index.

Then the base station may notify the terminal of the configuration pattern index and the OFDM symbol index by signaling.

In the embodiments of the present application, the base station determines the configuration information of the CSI-RS, transmits the configuration information to the terminal by signaling, and transmits the CSI-RS to the terminal according to the configuration information, so that the terminal may obtain the configuration pattern index of the CSI-RS configuration pattern and the OFDM symbol index according to the received configuration information, to thereby determine the time-frequency position of the CSI-RS and implement the channel measurement by using the CSI-RS at the time-frequency position.

### Second embodiment

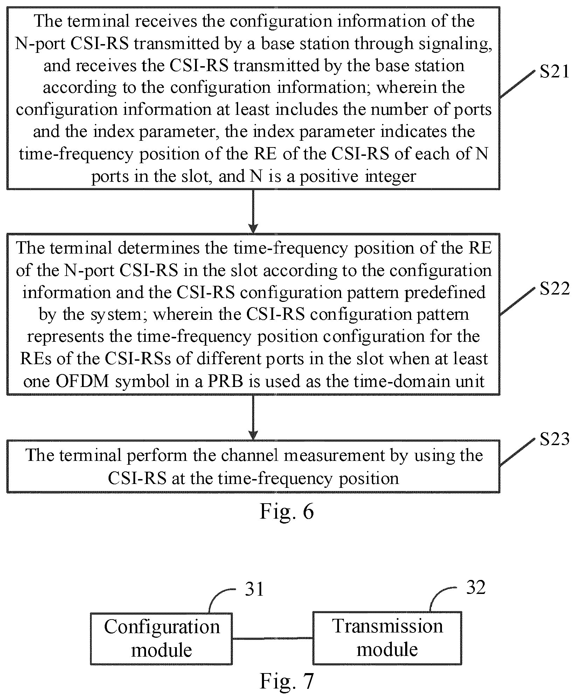

Based on the same inventive concept, as shown in Fig.6, an embodiment of the present application further provides a channel measurement method applied to a terminal, and the method may be described as follows.

S21: the terminal receives the configuration information of the N-port CSI-RS transmitted by a base station through signaling, and receives the CSI-RS transmitted by the base station according to the configuration information; wherein the configuration information at least includes the number of ports and the index parameter, the index parameter indicates the time-frequency position of the RE of the CSI-RS of each of N ports in the slot, and N is a positive integer.

S22: the terminal determines the time-frequency position of the RE of the N-port CSI-RS in the slot according to the configuration information and the CSI-RS configuration pattern predefined by the system; wherein the CSI-RS configuration pattern represents the time-frequency position configuration for the RE of the CSI-RS of different port in the slot when at least one OFDM symbol in a PRB is used as the time-domain unit.

S23: the terminal performs the channel measurement by using the CSI-RS at the time-frequency position.

Specifically, the terminal may be a device within the coverage area of the base station, such as a user equipment or the like.

In an embodiment of the present application, after receiving the configuration information of the N-port CSI-RS transmitted by the base station through the high-level signaling and receiving the CSI-RS transmitted by the base station according to the configuration information, the terminal may obtain at least the number of ports and the index parameter included in the configuration information, wherein the value of the number of ports may correspond to N-port, for example, when N=16, the value of the number of ports is 16.

The index parameter may include the configuration pattern index and the OFDM symbol index, the configuration pattern index is the position index of the RE of the CSI-RS determined according to the CSI-RS configuration pattern predefined by the system in the frequency domain, and the OFDM symbol index indicates the position of the OFDM symbol corresponding to the RE of the CSI-RS in the time domain.

The CSI-RS configuration pattern predefined by the system may refer to the corresponding CSI-RS configuration patterns for the CSI-RSs of different ports defined by the system when using one or two OFDM symbols in a PRB as the time-frequency unit, which is known by the base station and the terminal. In an embodiment of the present application, the CSI-RS configuration pattern predefined by the system in S12 may be obtained automatically by the terminal, for example locally or from a server, or may be obtained from the base station, for example from the downlink data transmitted by the base station. The CSI-RS configuration pattern predefined by the system may refer to the above patterns shown in Figs.3A-3C and the related description thereof, and will not be described here.

In S12, the terminal may determine the time-frequency position of the RE of the CSI-RS in the slot according to the number of ports and the index parameter in the received configuration information and the CSI-RS configuration pattern predefined by the system.

For example, when the number of ports transmitted by the base station and received by the terminal is 4 and simultaneously the terminal receives the configuration pattern index and the OFDM symbol index in the CSI-RS configuration information transmitted by the base station, the terminal may determine the time-frequency position of the RE of the CSI-RS in the slot according to the number of ports, the configuration pattern index, the OFDM symbol index and the CSI-RS configuration pattern predefined by the system.

If the configuration information received by the terminal further includes the aggregation parameter that represents the aggregation mode of the REs of the CSI-RS in the slot, the terminal may determine the time-frequency position of each aggregation part of the CSI-RS in the slot according to the number of ports, the aggregation parameter, the index parameter, and the CSI-RS configuration pattern predefined by the system.

Of course, in the practical applications, the terminal may also automatically determine the aggregation parameter according to the system predefinition, for example, the system predefines that 16-port may be obtained by aggregating four 4-port CSI-RS configuration patterns a or four 4-port CSI-RS configuration patterns b or the like.

After the terminal determines the time-frequency position of the CSI-RS according to the received configuration information and the CSI-RS configuration pattern predefined by the system, the interface uses the CSI-RS at the time-frequency position for the channel measurement and CSI calculation.

### Third embodiment

Based on the same inventive concept, as shown in Fig.7, an embodiment of the present application further discloses a base station which may be configured to execute the pilot configuration method in Fig.2 and includes a configuration module 31 and a transmission module 32.

The configuration module 31 may be configured to determine the configuration information of the N-port CSI-RS according to the CSI-RS configuration pattern predefined by the system; wherein the CSI-RS configuration pattern represents the time-frequency position configuration for the REs of the CSI-RSs of different ports in the slot when at least one OFDM symbol in a PRB is used as the time-domain unit, the configuration information at least includes the number of ports and the index parameter, the number of ports is N, the index parameter indicates the time-frequency position of the RE of the CSI-RS of each of N ports in the slot, and N is a positive integer.

The transmission module 32 may be configured to transmit the configuration information to a terminal connected to the base station by signaling, and transmit the CSI-RS according to the configuration information, so that the terminal determines the time-frequency position of the RE of the N-port CSI-RS in the slot according to the configuration information and the CSI-RS configuration pattern predefined by the system, and performs the channel measurement by using the CSI-RS at the time-frequency position.

Optionally, the index parameter includes a configuration pattern index and an OFDM symbol index, the configuration pattern index is the position index of the RE of the CSI-RS determined according to the CSI-RS configuration pattern predefined by the system in the frequency domain, and the OFDM symbol index indicates the position of the OFDM symbol corresponding to the RE of the CSI-RS in the time domain.

Optionally, when N=1, 2 or 4, the configuration module 31 may include:
a first determining module configured to determine the index parameter of the RE of the CSI-RS in the slot according to the CSI-RS configuration pattern predefined by the system;
a second determining module configured to determine the configuration information of the CSI-RS according to the port number of the N-port and the index parameter.

Optionally, when N≥8, the configuration information further includes the aggregation parameter represents the aggregation mode of the RE of the N-port CSI-RS in the slot; in this way, the configuration module 31 may include:
a third determining module configured to determine the aggregation parameter of the N-port CSI-RS, and determine the index parameter of the RE of each aggregation part of the N-port CSI-RS in the slot respectively according to the CSI-RS configuration pattern predefined by the system;
a fourth determining module configured to determine the configuration information of the CSI-RS according to the port number of the N-port, the index parameter and the aggregation parameter.

Optionally, when transmitting the index parameters in the configuration information to the connected terminal by signaling, the transmission module 32 is configured to:
transmit the configuration pattern indexes and OFDM symbol indexes of all REs of the N-port CSI-RS to the terminal by signaling; or
transmit the configuration pattern index and the OFDM symbol index of at least one RE of the N-port CSI-RS to the terminal by signaling.

### Fourth embodiment

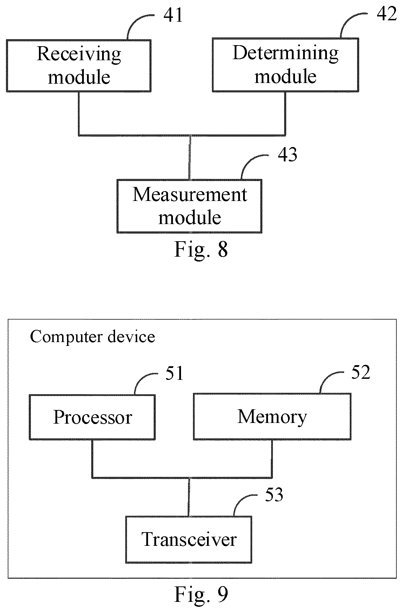

Based on the same inventive concept, as shown in Fig.8, an embodiment of the present application further discloses a terminal which may be used to perform the channel measurement method in Fig.6 and includes a receiving module 41, a determining module 42, and a measurement module 43.

The receiving module 41 may be configured to receive the configuration information of the N-port CSI-RS transmitted by a base station through signaling, and receive the CSI-RS transmitted by the base station according to the configuration information; wherein the configuration information at least includes the number of ports and the index parameter, the index parameter indicates the time-frequency position of the RE of the CSI-RS in the slot, and N is a positive integer.

The determining module 42 may be configured to determine the time-frequency position of the RE of the N-port CSI-RS in the slot according to the configuration information and the CSI-RS configuration pattern predefined by the system; wherein the CSI-RS configuration pattern represents the time-frequency position configuration for the REs of the CSI-RSs of different ports in the slot when at least one OFDM symbol in a PRB is used as the time-domain unit.

The measurement module 43 may be configured to perform the channel measurement by using the CSI-RS at the time-frequency position.

Optionally, when the configuration information further includes the aggregation parameter represents the aggregation mode of the RE of the CSI-RS in the slot, the determining module 42 is configured to determine the time-frequency position of each aggregation part of the N-port CSI-RS in the slot according to the number of ports, the aggregation parameter, the index parameter, and the CSI-RS configuration pattern predefined by the system.

### Fifth embodiment

An embodiment of the present application further provides a computer device, as shown in Fig.9, which includes a processor 51, a memory 52 and a transceiver 53 which may be connected by a bus, wherein the transceiver 53 receives and transmits the data under the control of the processor 51, e.g., transmits/receives the CSI-RS configuration information or CSI or the like, the memory 52 stores the preset programs therein, and the processor 51 is configured to implement the steps of the methods provided in the first and second embodiments of the present application when executing the computer program stored in the memory 52.

Optionally, the processor 51 may specifically be a central processor, an Application Specific Integrated Circuit (ASIC), one or more integrated circuits for controlling the program execution, a hardware circuit developed by using the Field Programmable Gate Array (FPGA), a baseband processor.

Optionally, the processor 51 may include at least one processing core.

Optionally, the memory 52 of the electronic device may include a Read Only Memory (ROM), a Random Access Memory (RAM), and a magnetic disk memory. The memory 52 is configured to store the data required by the processor 51 when running. The number of memories 52 is one or more.

### Fifth embodiment

An embodiment of the present application further provides a computer readable storage medium storing the computer instructions, which may implement the steps of the pilot configuration method provided in the first embodiment of the present application and of the channel measurement method of the second embodiment when running on the computer.

In the embodiment of the present application, it should be understood that the disclosed network traffic monitoring method and network traffic monitoring system may be implemented in other ways. For example, the device embodiments described above are only schematic, for example, the division of units is merely a logical function division. In an actual implementation, there may be other division manners, for example, a plurality of units or components may be combined or integrated to another system, or some features may be ignored or not performed. In addition, the displayed or discussed mutual coupling or direct coupling or communication connection may be implemented through the indirect coupling or communication connection between some interfaces, devices or units, and may be in the electrical or other forms.

In the embodiment of the present application, various functional units may be integrated into one processing unit, or various units may also be independent physical modules.

When the integrated unit is implemented in the form of software functional unit and sold or used as an independent product, it may be stored in a computer readable storage medium. Based on such understanding, all or a part of the technical solution of the embodiment of the present application may be embodied in the form of software product. The computer software product is stored in a storage medium, and includes several instructions used to enable a computer device (which may be, for example, personal computer, server, network device or the like) or a processor to perform all or some of the steps of the methods of various embodiments of the present application. The above-mentioned storage medium includes: Universal Serial Bus (USB) flash drive, mobile hard disk, Read-Only Memory (ROM), Random Access Memory (RAM), magnetic disk or compact disc or various media that can store the program codes.

It should be understood by those skilled in the art that the embodiments of the present application can provide methods, systems and computer program products. Thus the present application can take the form of hardware embodiments alone, software embodiments alone, or embodiments combining the software and hardware aspects. Also the present application can take the form of computer program products implemented on one or more computer usable storage mediums (including but not limited to magnetic disk memories, CD-ROMs, optical memories and the like) containing computer usable program codes therein.

The present application is described by reference to the flow charts and/or the block diagrams of the methods, the devices (systems) and the computer program products according to the embodiments of the present application. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Although the preferred embodiments of the present application have been described, those skilled in the art can make additional alterations and modifications to these embodiments once they learn about the basic creative concepts. Thus the attached claims are intended to be interpreted to include the preferred embodiments as well as all the alterations and modifications falling within the scope of the present application.

Evidently those skilled in the art can make various modifications and variations to the embodiments of the present application without departing from the scope of the embodiments of the present application. Thus the present application is also intended to encompass these modifications and variations therein as long as these modifications and variations to the embodiments of the present application come into the scope of the claims of the present application.

## Claims

1. A pilot configuration method, applied to a base station, the method comprises:
determining (S11), by the base station, configuration information of an N-port Channel State Information-Reference Signal, CSI-RS, according to a CSI-RS configuration pattern predefined by a system; wherein the CSI-RS configuration pattern represents time-frequency position configuration for Resource Elements, REs, of CSI-RSs of different ports in a slot when at least one Orthogonal Frequency Division Multiplexing, OFDM, symbol in a Physical Resource Block, PRB, is used as a time-domain unit, the configuration information at least comprises the number of ports and an index parameter, the number of ports is N, the index parameter indicates a time-frequency position of an RE of a CSI-RS of each of N ports in the slot, and N is a positive integer;
transmitting (S12), by the base station, the configuration information to a terminal connected to the base station by signaling, and transmitting the CSI-RS according to the configuration information, so that the terminal determines a time-frequency position of an RE of the N-port CSI-RS in the slot according to the configuration information and the CSI-RS configuration pattern predefined by the system, and performs a channel measurement by using the CSI-RS at the time-frequency position;
**characterized in that**, the index parameter comprises a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

2. The method of claim 1, wherein when N = 1, 2 or 4,
determining, by the base station, configuration information of the N-port CSI-RS according to the CSI-RS configuration pattern predefined by the system, comprises:
determining, by the base station, an index parameter of the RE of the N-port CSI-RS in the slot according to the CSI-RS configuration pattern predefined by the system;
determining, by the base station, the configuration information of the CSI-RS according to the port number of the N-port and the index parameter.

3. The method of claim 1, wherein when N≥8, the configuration information further comprises an aggregation parameter represents an aggregation mode of the RE of the N-port CSI-RS in the slot;
determining, by the base station, configuration information of the N-port CSI-RS according to the CSI-RS configuration pattern predefined by the system, comprises:
determining, by the base station, an aggregation parameter of the N-port CSI-RS, and determining an index parameter of the RE of each aggregation part of the N-port CSI-RS in the slot respectively according to the CSI-RS configuration pattern predefined by the system;
determining, by the base station, the configuration information of the CSI-RS according to the port number of the N-port, the index parameter and the aggregation parameter.

4. The method of claim 3, wherein when the base station transmits the index parameter in the configuration information to the connected terminal by signaling, the method comprises:
transmitting, by the base station, configuration pattern indexes and OFDM symbol indexes of all REs of the N-port CSI-RS to the terminal by signaling; or
transmitting, by the base station, a configuration pattern index and an OFDM symbol index of at least one RE of the N-port CSI-RS to the terminal by signaling.

5. A channel measurement method, applied to a terminal, wherein the method comprises:
receiving (S21) configuration information of an N-port Channel State Information-Reference Signal, CSI-RS, transmitted by a base station through signaling, and receiving the CSI-RS transmitted by the base station according to the configuration information; wherein the configuration information at least comprises the number of ports and an index parameter, the index parameter is used to indicate a time-frequency position of a Resource Element, RE, of a CSI-RS of each of N ports in a slot, and N is a positive integer;
determining (S22), by the terminal, a time-frequency position of the N-port CSI-RS in the slot according to the configuration information and a CSI-RS configuration pattern predefined by a system; wherein the CSI-RS configuration pattern represents time-frequency position configuration for REs of CSI-RSs of different ports in the slot when at least one Orthogonal Frequency Division Multiplexing, OFDM, symbol in a Physical Resource Block, PRB, is used as a time-domain unit;
performing (S23), by the terminal, a channel measurement by using the CSI-RS at the time-frequency position;
**characterized in that**, the index parameter comprises a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

6. The method of claim 5, wherein when the configuration information further comprises an aggregation parameter, which represents an aggregation mode of the RE of the N-port CSI-RS in the slot;
determining, by the terminal, the time-frequency position of the RE of the N-port CSI-RS in the slot according to the configuration information and the CSI-RS configuration pattern predefined by the system, comprises:
determining, by the terminal, a time-frequency position of each aggregation part of the N-port CSI-RS in the slot according to the number of ports, the aggregation parameter, the index parameter, and the CSI-RS configuration pattern predefined by the system.

7. A base station, comprising:
a configuration module (31) configured to determine configuration information of an N-port Channel State Information-Reference Signal, CSI-RS, according to a CSI-RS configuration pattern predefined by a system; wherein the CSI-RS configuration pattern represents time-frequency position configuration for Resource Elements, REs, of CSI-RSs of different ports in a slot when at least one Orthogonal Frequency Division Multiplexing, OFDM, symbol in a Physical Resource Block, PRB, is used as a time-domain unit, the configuration information at least comprises the number of ports and an index parameter, the number of ports is N, the index parameter indicates a time-frequency position of an RE of a CSI-RS of each of N ports in the slot, and N is a positive integer;
a transmission module (32) configured to transmit the configuration information to a terminal connected to the base station by signaling, and transmit the CSI-RS according to the configuration information, so that the terminal determines a time-frequency position of an RE of the N-port CSI-RS in the slot according to the configuration information and the CSI-RS configuration pattern predefined by the system, and performs a channel measurement by using the CSI-RS at the time-frequency position;
**characterized in that**, the index parameter comprises a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

8. The base station of claim 7, wherein when N = 1, 2 or 4,
the configuration module (31) comprises:
a first determining module configured to determine an index parameter of the RE of the CSI-RS in the slot according to the CSI-RS configuration pattern predefined by the system;
a second determining module configured to determine the configuration information of the CSI-RS according to the port number of the N-port and the index parameter.

9. The base station of claim 7, wherein when N≥8, the configuration information further comprises an aggregation parameter represents an aggregation mode of the RE of the N-port CSI-RS in the slot;
the configuration module (31) comprises:
a third determining module configured to determine an aggregation parameter of the N-port CSI-RS, and determine an index parameter of the RE of each aggregation part of the N-port CSI-RS in the slot respectively according to the CSI-RS configuration pattern predefined by the system;
a fourth determining module configured to determine the configuration information of the CSI-RS according to the port number of the N-port, the index parameter and the aggregation parameter.

10. The base station of claim 9, wherein when transmitting the index parameter in the configuration information to the connected terminal by signaling, the transmission module (32) is configured to:
transmit configuration pattern indexes and OFDM symbol indexes of all REs of the N-port CSI-RS to the terminal by signaling; or
transmit a configuration pattern index and an OFDM symbol index of at least one RE of the N-port CSI-RS to the terminal by signaling.

11. A terminal, comprising:
a receiving module (41) configured to receive configuration information of an N-port Channel State Information-Reference Signal, CSI-RS, transmitted by a base station through signaling, and receive the CSI-RS transmitted by the base station according to the configuration information; wherein the configuration information at least comprises the number of ports and an index parameter, the index parameter indicates a time-frequency position of a Resource Element, RE, of the CSI-RS in a slot, and N is a positive integer;
a determining module (42) configured to determine a time-frequency position of the RE of the N-port CSI-RS in the slot according to the configuration information and a CSI-RS configuration pattern predefined by a system; wherein the CSI-RS configuration pattern represents time-frequency position configuration for REs of CSI-RSs of different ports in the slot when at least one Orthogonal Frequency Division Multiplexing, OFDM, symbol in a Physical Resource Block, PRB, is used as a time-domain unit;
a measurement module (43) configured to perform a channel measurement by using the CSI-RS at the time-frequency position
**characterized in that**, the index parameter comprises a configuration pattern index and an OFDM symbol index, the configuration pattern index indicates one of a plurality of configurations of the CSI-RS configuration pattern predefined by the system and corresponds to a position of the RE of the CSI-RS determined according to the CSI-RS configuration pattern predefined by the system in the frequency domain, and the OFDM symbol index indicates a position of an OFDM symbol corresponding to the RE of the CSI-RS in the time domain;
wherein when N=2, the plurality of configurations is 6 where each configuration pattern corresponds to two adjacent REs on one OFDM symbol;
when N=4, the plurality of configurations is 3 where each configuration pattern corresponds to four adjacent REs on one OFDM symbol; or the plurality of configurations is 5 where each configuration pattern corresponds to four adjacent REs on one OFDM symbol; or the plurality of configurations is 6 where each configuration pattern corresponds to two adjacent REs on two OFDM symbols.

12. The terminal of claim 11, wherein when the configuration information further comprises an aggregation parameter, which represents an aggregation mode of the RE of the CSI-RS in the slot;
the determining module (42) is configured to determine a time-frequency position of each aggregation part of the N-port CSI-RS in the slot according to the number of ports, the aggregation parameter, the index parameter, and the CSI-RS configuration pattern predefined by the system.

13. A computer readable storage medium, wherein the computer readable storage medium stores computer instructions, which cause a computer to perform the method of any one of claims 1-6 when running on the computer.

## Patentansprüche

1. Pilotkonfigurierungsverfahren, das auf eine Basisstation angewendet wird, wobei das Verfahren Folgendes umfasst:
Bestimmen (S11), durch die Basisstation, von Konfigurationsinformationen eines N-Port-Kanalzustandsinformations-Referenzsignals (CSI-RS) gemäß einem vom System vordefinierten CSI-RS-Konfigurationsmuster; wobei das CSI-RS-Konfigurationsmuster die Zeit-Frequenz-Positionskonfiguration für Ressourcenelemente (REs) von CSI-RSs verschiedener Ports in einem Slot darstellt, wenn mindestens ein Orthogonal Frequency Division Multiplexing (OFDM)-Symbol in einem physischen Ressourcenblock (PRB) als Zeitbereichseinheit verwendet wird, die Konfigurationsinformationen mindestens die Anzahl der Ports und einen Indexparameter umfassen, die Anzahl der Ports N beträgt, der Indexparameter eine Angabe zur Zeit-Frequenz-Position eines RE eines CSI-RS jedes der N Ports im Slot macht und N eine positive Ganzzahl ist;
Übertragen (S12), durch die Basisstation, der Konfigurationsinformationen an ein Endgerät, das durch Signalisierung mit der Basisstation verbunden ist, und Übertragen des CSI-RS gemäß den Konfigurationsinformationen, so dass das Endgerät eine Zeit-Frequenz-Position eines RE des N-Port-CSI-RS in dem Slot gemäß den Konfigurationsinformationen und dem CSI-RS-Konfigurationsmuster bestimmt, das durch das System vordefiniert ist, und eine Kanalmessung unter Verwendung des CSI-RS an der Zeit-Frequenz-Position durchführt;
**dadurch gekennzeichnet, dass** der Indexparameter einen Konfigurationsmusterindex und einen OFDM-Symbolindex umfasst, der Konfigurationsmusterindex eine einer Vielzahl von Konfigurationen des durch das System vordefinierten CSI-RS-Konfigurationsmusters angibt und einer Position des RE des CSI-RS entspricht, die gemäß dem durch das System vordefinierten CSI-RS-Konfigurationsmuster im Frequenzbereich bestimmt wird, und der OFDM-Symbolindex eine Position eines OFDM-Symbols angibt, das dem RE des CSI-RS im Zeitbereich entspricht;
wobei, wenn N = 2 ist, die Vielzahl von Konfigurationen 6 ist, wobei jedes Konfigurationsmuster zwei benachbarten REs auf einem OFDM-Symbol entspricht;
wenn N = 4 ist, die Vielzahl von Konfigurationen 3 ist, wobei jedes Konfigurationsmuster vier benachbarten REs auf einem OFDM-Symbol entspricht; oder die Vielzahl von Konfigurationen 5 ist, wobei jedes Konfigurationsmuster vier benachbarten REs auf einem OFDM-Symbol entspricht;
oder die Vielzahl von Konfigurationen 6 ist, wobei jedes Konfigurationsmuster zwei benachbarten REs auf zwei OFDM-Symbolen entspricht.

2. Verfahren nach Anspruch 1, wobei, wenn N = 1, 2 oder 4 ist,
das Bestimmen, durch die Basisstation, von Konfigurationsinformationen des N-Port-CSI-RS gemäß dem CSI-RS-Konfigurationsmuster, das durch das System vordefiniert ist, Folgendes umfasst:
Bestimmen, durch die Basisstation, eines Indexparameters des RE des N-Port-CSI-RS in dem Slot gemäß dem CSI-RS-Konfigurationsmuster, das durch das System vordefiniert ist;
Bestimmen, durch die Basisstation, der Konfigurationsinformationen des CSI-RS gemäß der Portnummer des N-Ports und dem Indexparameter.

3. Verfahren nach Anspruch 1, wobei, wenn N ≥ 8, die Konfigurationsinformationen ferner einen Aggregationsparameter umfassen, der einen Aggregationsmodus des RE des N-Port-CSI-RS in dem Slot repräsentiert;
das Bestimmen, durch die Basisstation, von Konfigurationsinformationen des N-Port-CSI-RS gemäß dem CSI-RS-Konfigurationsmuster, das durch das System vordefiniert ist, Folgendes umfasst:
Bestimmen, durch die Basisstation, eines Aggregationsparameters des N-Port-CSI-RS und Bestimmen eines Indexparameters des RE jedes Aggregationsteils des N-Port-CSI-RS in dem Slot jeweils gemäß dem CSI-RS-Konfigurationsmuster, das durch das System vordefiniert ist;
Bestimmen, durch die Basisstation, der Konfigurationsinformationen des CSI-RS gemäß der Portnummer des N-Ports, dem Indexparameter und dem Aggregationsparameter.

4. Verfahren nach Anspruch 3, wobei, wenn die Basisstation den Indexparameter in den Konfigurationsinformationen durch Signalisierung an das verbundene Endgerät überträgt, das Verfahren Folgendes umfasst:
Übertragen, durch die Basisstation, von Konfigurationsmusterindizes und OFDM-Symbolindizes aller REs des N-Port-CSI-RS an das Endgerät durch Signalisierung; oder
Übertragen, durch die Basisstation, eines Konfigurationsmusterindex und eines OFDM-Symbolindexes von mindestens einem RE des N-Port-CSI-RS an das Endgerät durch Signalisierung.

5. Kanalmessverfahren, angewendet auf ein Endgerät, wobei das Verfahren Folgendes umfasst:
Empfangen (S21) von Konfigurationsinformationen eines N-Port-Kanalzustandsinformations-Referenzsignals (CSI-RS), das durch eine Basisstation durch Signalisierung übertragen wird, und Empfangen des CSI-RS, das durch die Basisstation gemäß den Konfigurationsinformationen übertragen wird; wobei die Konfigurationsinformationen mindestens die Anzahl von Ports und einen Indexparameter umfassen, der Indexparameter verwendet wird, um eine Zeit-Frequenz-Position eines Ressourcenelements (RE) eines CSI-RS jedes von N Ports in einem positiven Slot anzugeben, und N eine positive Ganzzahl ist;
Bestimmen (S22), durch das Endgerät, einer Zeit-Frequenz-Position des N-Port-CSI-RS in dem Slot gemäß den Konfigurationsinformationen und einem CSI-RS-Konfigurationsmuster, das durch ein System vordefiniert ist; wobei das CSI-RS-Konfigurationsmuster eine Zeit-Frequenz-Positionskonfiguration für REs von CSI-RSs verschiedener Ports in dem Slot darstellt, wenn mindestens ein Orthogonal Frequency Division Multiplexing (OFDM)-Symbol in einem physischen Ressourcenblock (PRB) als eine Zeitbereichseinheit verwendet wird;
Durchführen (S23), durch das Endgerät, einer Kanalmessung unter Verwendung des CSI-RS an der Zeit-Frequenz-Position;
**dadurch gekennzeichnet, dass** der Indexparameter einen Konfigurationsmusterindex und einen OFDM-Symbolindex umfasst, der Konfigurationsmusterindex eine einer Vielzahl von Konfigurationen des durch das System vordefinierten CSI-RS-Konfigurationsmusters angibt und einer Position des RE des CSI-RS entspricht, die gemäß dem durch das System vordefinierten CSI-RS-Konfigurationsmuster im Frequenzbereich bestimmt wird, und der OFDM-Symbolindex eine Position eines OFDM-Symbols angibt, das dem RE des CSI-RS im Zeitbereich entspricht;
wobei, wenn N = 2 ist, die Vielzahl von Konfigurationen 6 ist, wobei jedes Konfigurationsmuster zwei benachbarten REs auf einem OFDM-Symbol entspricht;
wenn N = 4 ist, die Vielzahl von Konfigurationen 3 ist, wobei jedes Konfigurationsmuster vier benachbarten REs auf einem OFDM-Symbol entspricht; oder die Vielzahl von Konfigurationen 5 ist, wobei jedes Konfigurationsmuster vier benachbarten REs auf einem OFDM-Symbol entspricht;
oder die Vielzahl von Konfigurationen 6 ist, wobei jedes Konfigurationsmuster zwei benachbarten REs auf zwei OFDM-Symbolen entspricht.

6. Verfahren nach Anspruch 5, wobei, wenn die Konfigurationsinformationen ferner einen Aggregationsparameter umfassen, der einen Aggregationsmodus des RE des N-Port-CSI-RS in dem Slot repräsentiert;
das Bestimmen, durch das Endgerät, der Zeit-Frequenz-Position des RE der N-Port-CSI-RS in dem Slot gemäß den Konfigurationsinformationen und dem CSI-RS-Konfigurationsmuster, das durch das System vordefiniert ist, Folgendes umfasst:
Bestimmen, durch das Endgerät, einer Zeit-Frequenz-Position jedes Aggregationsteils des N-Port-CSI-RS in dem Slot gemäß der Anzahl von Ports, dem Aggregationsparameter, dem Indexparameter und dem CSI-RS-Konfigurationsmuster, die durch das System vordefiniert sind.

7. Basisstation, die Folgendes umfasst:
ein Konfigurationsmodul (31), das für das Bestimmen von Konfigurationsinformationen eines N-Port-Kanalzustandsinformations-Referenzsignals (CSI-RS) gemäß einem vom System vordefinierten CSI-RS-Konfigurationsmuster ausgelegt ist; wobei das CSI-RS-Konfigurationsmuster die Zeit-Frequenz-Positionskonfiguration für Ressourcenelemente (REs) von CSI-RSs verschiedener Ports in einem Slot darstellt, wenn mindestens ein Orthogonal Frequency Division Multiplexing (OFDM)-Symbol in einem physischen Ressourcenblock (PRB) als Zeitbereichseinheit verwendet wird, die Konfigurationsinformationen mindestens die Anzahl der Ports und einen Indexparameter umfassen, die Anzahl der Ports N beträgt, der Indexparameter eine Angabe zur Zeit-Frequenz-Position eines RE eines CSI-RS jedes der N Ports im Slot macht und N eine positive Ganzzahl ist;
ein Übertragungsmodul (32), das dazu ausgelegt ist, die Konfigurationsinformationen durch Signalisierung an ein mit der Basisstation verbundenes Endgerät zu übertragen und das CSI-RS gemäß den Konfigurationsinformationen zu übertragen, so dass das Endgerät eine Zeit-Frequenz-Position eines RE des N-Port-CSI-RS in dem Slot gemäß den Konfigurationsinformationen und dem CSI-RS-Konfigurationsmuster, das durch das System vordefiniert ist, bestimmt und eine Kanalmessung unter Verwendung des CSI-RS an der Zeit-Frequenz-Position durchführt;
**dadurch gekennzeichnet, dass** der Indexparameter einen Konfigurationsmusterindex und einen OFDM-Symbolindex umfasst, der Konfigurationsmusterindex eine einer Vielzahl von Konfigurationen des durch das System vordefinierten CSI-RS-Konfigurationsmusters angibt und einer Position des RE des CSI-RS entspricht, die gemäß dem durch das System vordefinierten CSI-RS-Konfigurationsmuster im Frequenzbereich bestimmt wird, und der OFDM-Symbolindex eine Position eines OFDM-Symbols angibt, das dem RE des CSI-RS im Zeitbereich entspricht;
wobei, wenn N = 2 ist, die Vielzahl von Konfigurationen 6 ist, wobei jedes Konfigurationsmuster zwei benachbarten REs auf einem OFDM-Symbol entspricht;
wenn N = 4 ist, die Vielzahl von Konfigurationen 3 ist, wobei jedes Konfigurationsmuster vier benachbarten REs auf einem OFDM-Symbol entspricht; oder die Vielzahl von Konfigurationen 5 ist, wobei jedes Konfigurationsmuster vier benachbarten REs auf einem OFDM-Symbol entspricht;
oder die Vielzahl von Konfigurationen 6 ist, wobei jedes Konfigurationsmuster zwei benachbarten REs auf zwei OFDM-Symbolen entspricht.

8. Basisstation nach Anspruch 7, wobei, wenn N = 1, 2 oder 4 ist,
das Konfigurationsmodul (31) Folgendes umfasst:
ein erstes Bestimmungsmodul, das dazu ausgelegt ist, einen Indexparameter des RE des CSI-RS in dem Slot gemäß dem durch das System vordefinierten CSI-RS-Konfigurationsmuster zu bestimmen;
ein zweites Bestimmungsmodul, das dazu ausgelegt ist, die Konfigurationsinformationen des CSI-RS gemäß der Portnummer des N-Ports und dem Indexparameter zu bestimmen.

9. Basisstation nach Anspruch 7, wobei, wenn N ≥ 8, die Konfigurationsinformationen ferner einen Aggregationsparameter umfassen, der einen Aggregationsmodus des RE des N-Port-CSI-RS in dem Slot repräsentiert;
das Konfigurationsmodul (31) Folgendes umfasst:
ein drittes Bestimmungsmodul, das dazu ausgelegt ist, einen Aggregationsparameter des N-Port-CSI-RS zu bestimmen und einen Indexparameter des RE jedes Aggregationsteils des N-Port-CSI-RS in dem Slot jeweils gemäß dem durch das System vordefinierten CSI-RS-Konfigurationsmuster zu bestimmen;
ein viertes Bestimmungsmodul, das dazu ausgelegt ist, die Konfigurationsinformationen des CSI-RS gemäß der Portnummer des N-Ports, dem Indexparameter und dem Aggregationsparameter zu bestimmen.

10. Basisstation nach Anspruch 9, wobei beim Übertragen des Indexparameters in den Konfigurationsinformationen an das verbundene Endgerät durch Signalisierung das Übertragungsmodul (32) zu Folgendem ausgelegt ist:
Übertragen von Konfigurationsmusterindizes und OFDM-Symbolindizes aller REs des N-Port-CSI-RS an das Endgerät durch Signalisierung; oder
Übertragen eines Konfigurationsmusterindexes und eines OFDM-Symbolindexes mindestens eines RE des N-Port-CSI-RS an das Endgerät durch Signalisierung.

11. Endgerät, das Folgendes umfasst:
ein Empfangsmodul (41), das dazu ausgelegt ist, Konfigurationsinformationen eines N-Port-Kanalzustandsinformations-Referenzsignals (CSI-RS) zu empfangen, das durch eine Basisstation durch Signalisierung übertragen wird, und das CSI-RS zu empfangen, das durch die Basisstation gemäß den Konfigurationsinformationen übertragen wird; wobei die Konfigurationsinformationen mindestens die Anzahl von Ports und einen Indexparameter umfassen, der Indexparameter eine Zeit-Frequenz-Position eines Ressourcenelements (RE) des CSI-RS in einem Slot angibt, und N eine positive Ganzzahl ist;
ein Bestimmungsmodul (42), das dazu ausgelegt ist, eine Zeit-Frequenz-Position des RE des N-Port-CSI-RS in dem Slot gemäß den Konfigurationsinformationen und einem CSI-RS-Konfigurationsmuster, das durch ein System vordefiniert ist, zu bestimmen; wobei das CSI-RS-Konfigurationsmuster eine Zeit-Frequenz-Positionskonfiguration für REs von CSI-RSs verschiedener Ports in dem Slot repräsentiert, wenn mindestens ein Orthogonal Frequency Division Multiplexing (OFDM)-Symbol in einem physischen Ressourcenblock, PRB, als ein Zeitbereichseinheit verwendet wird;
ein Messmodul (43), das dazu ausgelegt ist, eine Kanalmessung unter Verwendung des CSI-RS an der Zeit-Frequenz-Position durchzuführen,
**dadurch gekennzeichnet, dass** der Indexparameter einen Konfigurationsmusterindex und einen OFDM-Symbolindex umfasst, der Konfigurationsmusterindex eine einer Vielzahl von Konfigurationen des durch das System vordefinierten CSI-RS-Konfigurationsmusters angibt und einer Position des RE des CSI-RS entspricht, die gemäß dem durch das System vordefinierten CSI-RS-Konfigurationsmuster im Frequenzbereich bestimmt wird, und der OFDM-Symbolindex eine Position eines OFDM-Symbols angibt, das dem RE des CSI-RS im Zeitbereich entspricht;
wobei, wenn N = 2 ist, die Vielzahl von Konfigurationen 6 ist, wobei jedes Konfigurationsmuster zwei benachbarten REs auf einem OFDM-Symbol entspricht;
wenn N = 4 ist, die Vielzahl von Konfigurationen 3 ist, wobei jedes Konfigurationsmuster vier benachbarten REs auf einem OFDM-Symbol entspricht; oder die Vielzahl von Konfigurationen 5 ist, wobei jedes Konfigurationsmuster vier benachbarten REs auf einem OFDM-Symbol entspricht;
oder die Vielzahl von Konfigurationen 6 ist, wobei jedes Konfigurationsmuster zwei benachbarten REs auf zwei OFDM-Symbolen entspricht.

12. Endgerät nach Anspruch 11, wobei, wenn die Konfigurationsinformationen ferner einen Aggregationsparameter umfassen, der einen Aggregationsmodus des RE des CSI-RS in dem Slot repräsentiert;
das Bestimmungsmodul (42) dazu ausgelegt ist, eine Zeit-Frequenz-Position jedes Aggregationsteils des N-Port-CSI-RS in dem Slot gemäß der Anzahl von Ports, dem Aggregationsparameter, dem Indexparameter und dem CSI-RS-Konfigurationsmuster zu bestimmen, die durch das System vordefiniert sind.

13. Computerlesbares Speichermedium, wobei das computerlesbare Speichermedium Computerbefehle speichert, die einen Computer veranlassen, das Verfahren gemäß einem der Ansprüche 1-6 auszuführen, wenn diese auf dem Computer durchgeführt werden.

## Revendications

1. Procédé de configuration de pilote, appliqué à une station de base, le procédé comprend :
la détermination (S11), par la station de base, d'informations de configuration d'un signal de référence d'informations d'état de canal, Channel State Information-Reference Signal, CSI-RS, de N port(s) selon un profil de configuration de CSI-RS prédéfini par un système ; dans lequel le profil de configuration de CSI-RS représente une configuration de position temps-fréquence pour des éléments de ressource, Resource Elements REs, de CSI-RSs de différents ports dans un intervalle lorsqu'au moins un symbole de multiplexage par répartition orthogonale de la fréquence, Orthogonal Frequency Division Multiplexing OFDM, dans un bloc de ressource physique, Physical Resource Block PRB, est utilisé en tant qu'unité de domaine de temps, les informations de configuration comprennent au moins le nombre de ports et un paramètre d'indice, le nombre de ports est N, le paramètre d'indice indique une position temps-fréquence d'un RE d'un CSI-RS de chacun de N ports dans l'intervalle, et N est un nombre entier positif ;
la transmission (S12), par la station de base, des informations de configuration, à un terminal connecté à la station de base, par signalisation, et la transmission du CSI-RS selon les informations de configuration, de telle sorte que le terminal détermine une position temps-fréquence d'un RE du CSI-RS de N port(s) dans l'intervalle selon les informations de configuration et le profil de configuration de CSI-RS prédéfini par le système, et réalise une mesure de canal en utilisant le CSI-RS à la position temps-fréquence ;
**caractérisé en ce que** le paramètre d'indice comprend un indice de profil de configuration et un indice de symbole OFDM, l'indice de profil de configuration indique une d'une pluralité de configurations du profil de configuration de CSI-RS prédéfini par le système et correspond à une position du RE du CSI-RS déterminée selon le profil de configuration de CSI-RS prédéfini par le système dans le domaine de fréquence, et l'indice de symbole OFDM indique une position d'un symbole OFDM correspondant au RE du CSI-RS dans le domaine de temps ;
dans lequel, lorsque N=2, la pluralité de configurations est de 6 où chaque profil de configuration correspond à deux REs adjacents sur un symbole OFDM ;
lorsque N=4, la pluralité de configurations est de 3 où chaque profil de configuration correspond à quatre REs adjacents sur un symbole OFDM ; ou la pluralité de configurations est de 5 où chaque profil de configuration correspond à quatre REs adjacents sur un symbole OFDM ;
ou la pluralité de configurations est de 6 où chaque profil de configuration correspond à deux REs adjacents sur deux symboles OFDM.

2. Procédé de la revendication 1, dans lequel, lorsque N=1, 2 ou 4,
la détermination, par la station de base, d'informations de configuration du CSI-RS de N port(s) selon le profil de configuration de CSI-RS prédéfini par le système, comprend :
la détermination, par la station de base, d'un paramètre d'indice du RE du CSI-RS de N port(s) dans l'intervalle selon le profil de configuration de CSI-RS prédéfini par le système ;
la détermination, par la station de base, des informations de configuration du CSI-RS selon le nombre de port(s) du (des) N port(s) et le paramètre d'indice.

3. Procédé de la revendication 1, dans lequel, lorsque N≥8, les informations de configuration comprennent en outre un paramètre d'agrégation qui représente un mode d'agrégation du RE du CSI-RS de N port(s) dans l'intervalle ;
la détermination, par la station de base, d'informations de configuration du CSI-RS de N port(s) selon le profil de configuration de CSI-RS prédéfini par le système, comprend :
la détermination, par la station de base, d'un paramètre d'agrégation du CSI-RS de N port(s), et la détermination d'un paramètre d'indice du RE de chaque partie d'agrégation du CSI-RS de N port(s) dans l'intervalle respectivement selon le profil de configuration de CSI-RS prédéfini par le système ;
la détermination, par la station de base, des informations de configuration du CSI-RS selon le nombre de port(s) du (des) N port(s), le paramètre d'indice, et le paramètre d'agrégation.

4. Procédé de la revendication 3, dans lequel, lorsque la station de base transmet le paramètre d'indice, dans les informations de configuration, au terminal connecté, par signalisation, le procédé comprend :
la transmission, par la station de base, d'indices de profil de configuration et d'indices de symbole OFDM de tous les REs du CSI-RS de N port(s), au terminal, par signalisation ; ou
la transmission, par la station de base, d'un indice de profil de configuration et d'un indice de symbole OFDM d'au moins un RE du CSI-RS de N port(s), au terminal, par signalisation.

5. Procédé de mesure de canal, appliqué à un terminal, dans lequel le procédé comprend :
la réception (S21) d'informations de configuration d'un signal de référence d'informations d'état de canal, Channel State Information-Reference Signal, CSI-RS, de N port(s), transmis par une station de base, par le biais de signalisation, et la réception du CSI-RS transmis par la station de base selon les informations de configuration ; dans lequel les informations de configuration comprennent au moins le nombre de ports et un paramètre d'indice, le paramètre d'indice est utilisé pour indiquer une position temps-fréquence d'un élément de ressource, Resource Element RE, d'un CSI-RS de chacun de N ports dans un intervalle, et N est un nombre entier positif ;
la détermination (S22), par le terminal, d'une position temps-fréquence du CSI-RS de N port(s) dans l'intervalle selon les informations de configuration et un profil de configuration de CSI-RS prédéfini par un système ; dans lequel le profil de configuration de CSI-RS représente une configuration de position temps-fréquence pour des REs de CSI-RSs de différents ports dans l'intervalle lorsqu'au moins un symbole de multiplexage par répartition orthogonale de la fréquence, Orthogonal Frequency Division Multiplexing OFDM, dans un bloc de ressource physique, Physical Resource Block PRB, est utilisé en tant qu'unité de domaine de temps ;
la réalisation (S23), par le terminal, d'une mesure de canal en utilisant le CSI-RS à la position temps-fréquence ;
**caractérisé en ce que** le paramètre d'indice comprend un indice de profil de configuration et un indice de symbole OFDM, l'indice de profil de configuration indique une d'une pluralité de configurations du profil de configuration de CSI-RS prédéfini par le système et correspond à une position du RE du CSI-RS déterminée selon le profil de configuration de CSI-RS prédéfini par le système dans le domaine de fréquence, et l'indice de symbole OFDM indique une position d'un symbole OFDM correspondant au RE du CSI-RS dans le domaine de temps ;
dans lequel, lorsque N=2, la pluralité de configurations est de 6 où chaque profil de configuration correspond à deux REs adjacents sur un symbole OFDM ;
lorsque N=4, la pluralité de configurations est de 3 où chaque profil de configuration correspond à quatre REs adjacents sur un symbole OFDM ; ou la pluralité de configurations est de 5 où chaque profil de configuration correspond à quatre REs adjacents sur un symbole OFDM ;
ou la pluralité de configurations est de 6 où chaque profil de configuration correspond à deux REs adjacents sur deux symboles OFDM.

6. Procédé de la revendication 5, dans lequel, lorsque les informations de configuration comprennent en outre un paramètre d'agrégation, qui représente un mode d'agrégation du RE du CSI-RS de N port(s) dans l'intervalle ;
la détermination, par le terminal, de la position temps-fréquence du RE du CSI-RS de N port(s) dans l'intervalle selon les informations de configuration et le profil de configuration de CSI-RS prédéfini par le système comprend :
la détermination, par le terminal, d'une position temps-fréquence de chaque partie d'agrégation du CSI-RS de N port(s) dans l'intervalle selon le nombre de ports, le paramètre d'agrégation, le paramètre d'indice, et le profil de configuration de CSI-RS prédéfini par le système.

7. Station de base, comprenant :
un module de configuration (31) configuré pour déterminer des informations de configuration d'un signal de référence d'informations d'état de canal, Channel State Information-Reference Signal, CSI-RS, de N port(s) selon un profil de configuration de CSI-RS prédéfini par un système ; dans laquelle le profil de configuration de CSI-RS représente une configuration de position temps-fréquence pour des éléments de ressource, Resource Elements REs, de CSI-RSs de différents ports dans un intervalle lorsqu'au moins un symbole de multiplexage par répartition orthogonale de la fréquence, Orthogonal Frequency Division Multiplexing OFDM, dans un bloc de ressource physique, Physical Resource Block PRB, est utilisé en tant qu'unité de domaine de temps, les informations de configuration comprennent au moins le nombre de ports et un paramètre d'indice, le nombre de ports est N, le paramètre d'indice indique une position temps-fréquence d'un RE d'un CSI-RS de chacun de N ports dans l'intervalle, et N est un nombre entier positif ;
un module de transmission (32) configuré pour transmettre les informations de configuration, à un terminal connecté à la station de base, par signalisation, et transmettre le CSI-RS selon les informations de configuration, de telle sorte que le terminal détermine une position temps-fréquence d'un RE du CSI-RS de N port(s) dans l'intervalle selon les informations de configuration et le profil de configuration de CSI-RS prédéfini par le système, et réalise une mesure de canal en utilisant le CSI-RS à la position temps-fréquence ;
**caractérisé en ce que** le paramètre d'indice comprend un indice de profil de configuration et un indice de symbole OFDM, l'indice de profil de configuration indique une d'une pluralité de configurations du profil de configuration de CSI-RS prédéfini par le système et correspond à une position du RE du CSI-RS déterminée selon le profil de configuration de CSI-RS prédéfini par le système dans le domaine de fréquence, et l'indice de symbole OFDM indique une position d'un symbole OFDM correspondant au RE du CSI-RS dans le domaine de temps ;
dans lequel, lorsque N=2, la pluralité de configurations est de 6 où chaque profil de configuration correspond à deux REs adjacents sur un symbole OFDM ;
lorsque N=4, la pluralité de configurations est de 3 où chaque profil de configuration correspond à quatre REs adjacents sur un symbole OFDM ; ou la pluralité de configurations est de 5 où chaque profil de configuration correspond à quatre REs adjacents sur un symbole OFDM ;
ou la pluralité de configurations est de 6 où chaque profil de configuration correspond à deux REs adjacents sur deux symboles OFDM.

8. Station de base de la revendication 7, dans laquelle, lorsque N=1, 2 ou 4,
le module de configuration (31) comprend :
un premier module de détermination configuré pour déterminer un paramètre d'indice du RE du CSI-RS dans l'intervalle selon le profil de configuration de CSI-RS prédéfini par le système ;
un deuxième module de détermination configuré pour déterminer les informations de configuration du CSI-RS selon le nombre de port(s) du (des) N port(s) et le paramètre d'indice.

9. Station de base de la revendication 7, dans laquelle, lorsque N≥8, les informations de configuration comprennent en outre un paramètre d'agrégation qui représente un mode d'agrégation du RE du CSI-RS de N port(s) dans l'intervalle ;
le module de configuration (31) comprend :
un troisième module de détermination configuré pour déterminer un paramètre d'agrégation du CSI-RS de N port(s), et déterminer un paramètre d'indice du RE de chaque partie d'agrégation du CSI-RS de N port(s) dans l'intervalle respectivement selon le profil de configuration de CSI-RS prédéfini par le système ;
un quatrième module de détermination configuré pour déterminer les informations de configuration du CSI-RS selon le nombre de port(s) du (des) N port(s), le paramètre d'indice, et le paramètre d'agrégation.

10. Station de base de la revendication 9, dans laquelle, lors de la transmission du paramètre d'indice, dans les informations de configuration, au terminal connecté, par signalisation, le module de transmission (32) est configuré pour :
transmettre des indices de profil de configuration et des indices de symbole OFDM de tous les REs du CSI-RS de N port(s) au terminal, par signalisation ; ou
transmettre un indice de profil de configuration et un indice de symbole OFDM d'au moins un RE du CSI-RS de N port(s) au terminal, par signalisation.

11. Terminal, comprenant :
un module de réception (41) configuré pour recevoir des informations de configuration d'un signal de référence d'informations d'état de canal, Channel State Information-Reference Signal, CSI-RS, de N port(s), transmis par une station de base, par le biais de signalisation, et recevoir le CSI-RS transmis par la station de base selon les informations de configuration ;
dans lequel les informations de configuration comprennent au moins le nombre de ports et un paramètre d'indice, le paramètre d'indice indique une position temps-fréquence d'un élément de ressource, Resource Element RE, du CSI-RS dans un intervalle, et N est un nombre entier positif ;
un module de détermination (42) configuré pour déterminer une position temps-fréquence du RE du CSI-RS de N port(s) dans l'intervalle selon les informations de configuration et un profil de configuration de CSI-RS prédéfini par un système ; dans lequel le profil de configuration de CSI-RS représente une configuration de position temps-fréquence pour REs de CSI-RSs de différents ports dans l'intervalle lorsqu'au moins un symbole de multiplexage par répartition orthogonale de la fréquence, Orthogonal Frequency Division Multiplexing OFDM, dans un bloc de ressource physique, Physical Resource Block PRB, est utilisé en tant qu'unité de domaine de temps ;
un module de mesure (43) configuré pour réaliser une mesure de canal en utilisant le CSI-RS à la position temps-fréquence,
**caractérisé en ce que** le paramètre d'indice comprend un indice de profil de configuration et un indice de symbole OFDM, l'indice de profil de configuration indique une d'une pluralité de configurations du profil de configuration de CSI-RS prédéfini par le système et correspond à une position du RE du CSI-RS déterminée selon le profil de configuration de CSI-RS prédéfini par le système dans le domaine de fréquence, et l'indice de symbole OFDM indique une position d'un symbole OFDM correspondant au RE du CSI-RS dans le domaine de temps ;
dans lequel, lorsque N=2, la pluralité de configurations est de 6 où chaque profil de configuration correspond à deux REs adjacents sur un symbole OFDM ;
lorsque N=4, la pluralité de configurations est de 3 où chaque profil de configuration correspond à quatre REs adjacents sur un symbole OFDM ; ou la pluralité de configurations est de 5 où chaque profil de configuration correspond à quatre REs adjacents sur un symbole OFDM ;
ou la pluralité de configurations est de 6 où chaque profil de configuration correspond à deux REs adjacents sur deux symboles OFDM.

12. Terminal de la revendication 11, dans lequel, lorsque les informations de configuration comprennent en outre un paramètre d'agrégation, qui représente un mode d'agrégation du RE du CSI-RS dans l'intervalle ;
le module de détermination (42) est configuré pour déterminer une position temps-fréquence de chaque partie d'agrégation du CSI-RS de N port(s) dans l'intervalle selon le nombre de ports, le paramètre d'agrégation, le paramètre d'indice, et le profil de configuration de CSI-RS prédéfini par le système.

13. Support de stockage lisible par ordinateur, dans lequel le support de stockage lisible par ordinateur stocke des instructions d'ordinateur, qui amènent un ordinateur à réaliser le procédé de l'une quelconque des revendications précédentes 1 à 6 lors de l'exécution sur l'ordinateur.
